# EUROPEAN PATENT SPECIFICATION

(11) **EP 2 311 678 B1**
(45) Date of publication and mention of the grant of the patent: **30.04.2014**
(21) Application number: 09172998.8
(22) Date of filing: 14.10.2009
(51) Int. Cl.: B60J 7/06

(54) **Improved operator for covering canvas of vehicles**
Verbesserte Bedienung für Planen von Fahrzeugen
Opérateur amélioré pour recouvrir les canevas de véhicules

(43) Date of publication of application: 20.04.2011
(73) Proprietor: Marcolin S.r.l., 33170 Pordenone (IT)
(72) Inventor: Amato, Davide, 33070, MARON DI BRUGNERA- (PORDENONE) (IT)
(74) Representative: Citron, Massimiliano

(56) References cited:
- EP-A2- 1 228 912
- FR-A1- 2 715 360
- GB-A- 2 410 473

## Description

The invention refers to an improved operator for covering canvas of vehicles, in particular heavy duty vehicles such as trucks, which in the rest of the description shall be used as an example. The invention can also be exploited on immovable open top-bodies.

In trucks, see for example, EP 1 884 386, a canvas is used to cover an open top-body. A canvas (see also fig. 1 of EP 1 738 946) is supported by centerings or arches sliding on the edge of the top-body which are hauled by a loop of rope, one for each side of the top-body, actuated by an electric motor. A description of such a rope system can be wholly seen, for example in EP 1 738 946, or in EP 1 228 912 A2.

On each foot of the centerings there is mounted a shoe which is suitable for sliding on the edge. The rope ends are fixed to such a shoe, which hauls the first centering and which is actuated by a driving pulley fitted on the shaft of an electric motor.

Especially in the field of trucks for transporting material there is now the need to contain all the bulk of or in the top-body which do not offer any benefits in terms of load capacity. On the other hand, solutions which try to waste as little as possible of the inner volume inside the top-body are increasingly sought after.

The electric motor for the rope, which is mounted outside the top-body, causes there to be an embossment in its shape which increases the apparent cubic volume of the top-body and at times it can be a hindrance. The embossment is substantial, because it coincides with the cylindrical casing of the motor. Moreover, the pulley system associated with the motor directly on its output shaft contributes to increasing the required space. Moreover, an electric motor is costly, and wears quickly especially if it has brushes.

The object of the invention is to propose an alternative to traditional actuation systems.

Such an object is obtained through an operator for covering canvas of a open top-body as claimed in claim 1.

The use of a linear actuator allows the electric rotary motor of the prior art to be eliminated, together with all its disadvantages. This results in a simple actuation system, which is cost-effective and very reliable.

The linear actuator comprises a linearly movable piston which is coupled with a mechanism for converting the linear motion into rotary motion, which is exploited to move the rope. Alternatively the rope can be fixed directly to the movable member of the linear actuator. For example, one can use a hollow tube and arrange inside a piston or slider which can be displaced through fluid pressure, wherein the rope has two extremities fixed to the slider so that a linear movement of the slider in two opposite directions causes a portion of rope to move in one direction or the opposite.

The actuation system can comprise a circuit to bring fluid under pressure to the movable piston, so that the fluid pressure pushes the piston and makes it move. For example, the fluid can be compressed air or oil under pressure. In this way, there is no intervention on the delicate electrical system of the vehicle, but rather the pneumatic system, which is more robust and easier to use, is exploited.

The actuation system further comprise:
(ii) a rack mounted on the piston and a toothed pulley engaged with it, a driving pulley on which the rope is wound and the rotation of which sets it in motion, a revolution multiplier mechanism between the toothed pulley and the driving pulley, so as to multiply the revs which are transmitted from the toothed pulley to the driving pulley.

The position of the linear actuator offers different possibilities and advantages. The linear actuator can be put on the side of the top-body, in the cases in which it is wished to reduce the length of the rope(s) used to a minimum; otherwise, it can be arranged above the edge/side panel of the top-body, so as to reduce the bulk on the sides of the top-body.

It should also be seen that many benefits are obtained even if the linear actuator is supplied electrically, since the rotary motor is in any case eliminated.

The invention and its advantages shall be in any case made clearer by the following description of embodiments and by the attached drawing in which:
Fig. 1 shows a side view of an operator according to the invention;
Fig. 2 shows a view from the top of a variant of operator according to the invention.

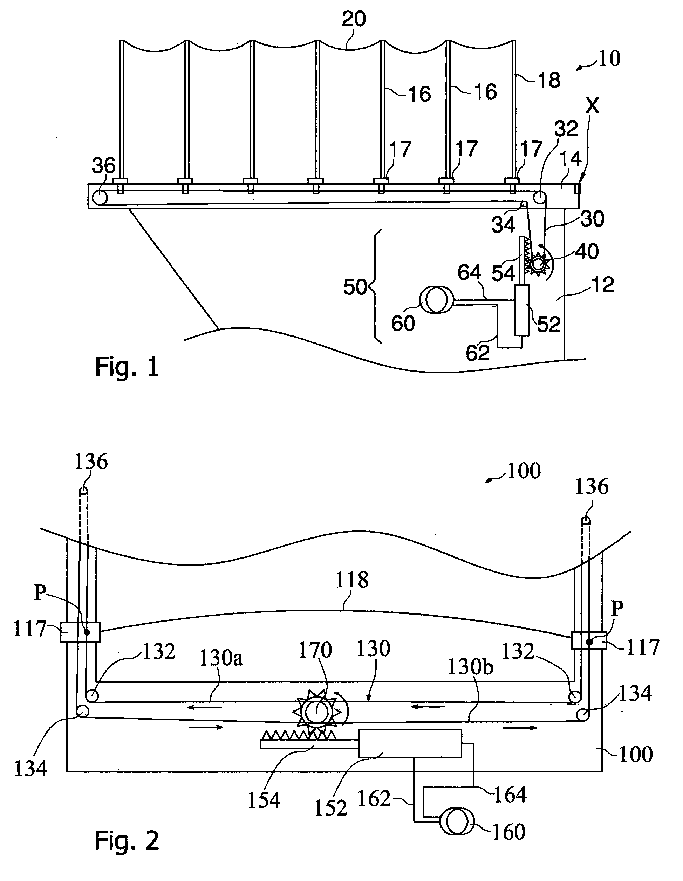

In fig. 1 an actuation system 10 is shown in which the canvas 20 for covering a top-body 12 is supported by centerings or arches 16 sliding on the edge 14 of the top-body 12. The centerings 16 are hauled by a loop of rope 30, preferably one on each side of the top-body 12, actuated by motor means 50.

The centerings 16 have a foot which slides on the edge 14 by means of a shoe 17, so as to better slide on the edge 14. The ends of the rope 30 are fixed on the shoe of the head centering 18 (the first of the series), said rope hauling the head centering forwards and backwards on the edge 14, opening out or packing the canvas 20. The other shoes 17 slide freely on the rope 30 and only use it as means for anchoring to the top-body 12.

The rope 30 slides in a loop around the side of the top-body 12 returned by return pulleys 32, 34, 36. Other configurations are possible, for example, that known in EP 1 738 946.

The motor means 50 comprise a toothed pulley 40, on which the rope 30 is wound, with the teeth engaging with a rack integral with a movable piston 54 which comes out from a cylinder 52. Two ducts 62, 64 reach the cylinder 52, said ducts being suitable for letting in and evacuating compressed air from the cylinder 52, the compressed air being taken from a compressor or reservoir 60.

The flow of compressed air, which passes through the cylinder 52, can be controlled through suitable valve means (not shown), and consequently the piston 54 can be moved forwards or backwards. The linear movement of the piston 54 is converted into a rotation of the pulley 40, which sets the rope 30, and thus the canvas 20, in motion.

Fig. 2 shows a variant 100 of the system, in which only the position of the motor means and the arrangement of the pulley which drives the rope change. Substantially equal components to those of the previous case have reference numerals increased by 100, and in order to keep the description brief they shall not be described any further.

A rope 130 slides above the edge of a top-body 112 returned by return pulleys 132, 134, 136, which have a rotation axis which is substantially vertical and/or perpendicular to the surface of the edge.

The motor means 150 which move it are now arranged above the edge of the top-body, and have a structure which is the same as the means 50. The equivalent position of the means 150 is indicated with X in fig. 1.

Now the rope 130 is wound on a toothed pulley 170 so as to form two rope loops 130 a, 130b, one for each side of the top-body 112 (like in EP 1 738 946). Each rope loop comprises a portion which slides in one direction, and simultaneously one portion which slides in opposite direction. It is thus sufficient to suitably connect the shoes 117 to the portions of rope having equiverse sliding direction to move the centerings in an ordered manner. The arrows in fig. 2 indicate the directions, and the points P the fixing points for fixing to a hauler pulley 118. It should be noted that the piston 154 substantially moves horizontally, parallel to the edge.

The actuation system 100 can also be mounted on the vertical side of the top-body in front of the cabin, i.e., usually the short side of the top-body. Preferably a protective casing can be used to protect the means 50, 150 and the associated gearing. Such a gearing can advantageously comprise a revolutions multiplier (not shown) placed between the pulley coupled with the movable actuator and a driving pulley on which the rope is wound. In this way the limited stroke of the movable member in the linear actuator with respect to the stroke of the rope necessary to move the canvas along the entire top-body is compensated for. The multiplier can be integrated, for example, in both variants of fig. 1 and 2.

## Claims

1. Actuation system for covering canvases of (20) an open top-body (12), comprising
- a set of centerings (16) sliding with their own feet (17) on the edge (14) of the top-body to support and open out/pack the covering canvas,
a loop or a portion of rope (30) having two extremities in traction on a centering (18) of said set, called hauler centering, for moving it backwards and forwards on the edge, motor means (50) for setting the rope loop in motion and moving the hauler centering,
**characterized in that**
the motor means comprise a linear actuator (52, 54) mounted so that the linear movement it generates is converted into a displacement of the rope,
the linear actuator further comprising a linearly movable piston (54) which is coupled with a mechanism for converting the linear motion into rotary motion,
the mechanism comprising
a rack mounted on the piston (54),
a toothed pulley (40) engaged with it,
a driving pulley on which the rope is wound and the rotation of which sets it in motion,
a revolution multiplier mechanism between the toothed pulley and the driving pulley, adapted to multiply the revs that from the toothed pulley (40) are transmitted to the driving pulley.

2. Actuation system according to claim 1, comprising a circuit (62, 64) for bringing fluid under pressure to the movable piston, so that the fluid pressure pushes the piston and makes it move.

3. Actuation system according to claim 2, wherein the fluid is compressed air.

4. Actuation system according to any one of the previous claims, wherein the linear actuator is arranged on the side of the top-body.

5. Actuation system according to any one of the previous claims 1 to 3, wherein the linear actuator is arranged above the edge/border of the top-body.

6. Actuation system according to any one of the previous claims 1 to 3, wherein the linear actuator comprises a hollow tube with a piston or slider inside it which is displaceable through the fluid pressure, the rope having two extremities fixed to the slider so that a linear displacement of the slider in two opposite directions causes a portion of rope to move in one direction or the opposite.

7. Actuation system according to any one of the previous claims, wherein the linear actuator is supplied with electric energy.

## Patentansprüche

1. Antriebssystem für Abdeckplanen (20) von einem offenen Oberteil (12) mit
- einem Satz von Zentrierungen (16), die mit ihren eigenen Füßen (17) auf der Kante (14) des Oberteils zum Abstützen und zum Öffnen/Auspacken der Abdeckplane gleiten,
ein Ring oder ein Teil eines Seils (30), dessen beiden Endstücke auf einer Zentrierung (18) des besagten Satzes, der als Zugzentrierung bezeichnet wird, unter Zug stehen, um sich auf der Kante rückwärts oder vorwärts zu bewegen, Motoranlage (50), um den Seilring in Bewegung zu setzen und um die Zugzentrierung zu bewegen,
**dadurch gekennzeichnet, dass**
der Motor ein lineares Stellglied (52, 54) umfasst, das so montiert ist, dass die von diesem erzeugte lineare Bewegung eine Bewegung des Seils verursacht,
das lineare Stellglied einen linear beweglichen Kolben (54) umfasst, der an einen Mechanismus gekoppelt ist, der die lineare in eine Drehbewegung umwandelt,
der Mechanismus umfasst
eine auf dem Kolben (54) montierte Zahnstange,
einen dort eingreifenden Zahnriemen (20),
ein Antriebsschwungrad, auf welches das Seil gewickelt wird und dessen Drehung es in Bewegung setzt,
einen Drehzahlverstärkermechanismus zwischen dem Zahnriemen und dem Antriebsriemen, die so angepasst sind, dass die Umdrehungen vervielfacht werden, die das Zahnrad (20) and das Antriebsrad übermittelt.

2. Antriebssystem gemäß Anspruch 1, mit einem Kreislauf (62, 64), um die unter Druck stehende Flüssigkeit an den beweglichen Kolben zu bringen, damit der Flüssigkeitsdruck den Kolben drückt und diesen bewegt.

3. Antriebssystem gemäß Anspruch 2, wo das Medium Druckluft ist.

4. Antriebssystem gemäß einem der vorhergehenden Ansprüche, wo das lineare Stellglied an der Seite des Oberteils angeordnet ist.

5. Antriebssystem gemäß einem der vorhergehenden Ansprüche 1 bis 3, wo das lineare Stellglied über der Kante/dem Rand des Oberteils angeordnet ist.

6. Antriebssystem gemäß einem der vorhergehenden Ansprüche 1 bis 3, wo das lineare Stellglied ein hohles Rohr mit einem Kolben oder Schieber innen umfasst, der sich durch den Flüssigkeitsdruck bewegt, wobei das Seil mit zwei Enden am Schieber befestigt ist, so dass eine lineare Bewegung des Schiebers in die beiden entgegengesetzten Richtungen dazu führt, dass ein Teil des Seils sich in eine Richtung oder die andere bewegt.

7. Antriebssystem gemäß einem der vorhergehenden Ansprüche, wo das lineare Stellglied mit elektrischer Energie gespeist wird.

## Revendications

1. Système d'actionnement pour toiles couvrantes (20) d'un corps supérieur ouvert (12), comprenant
- un jeu de centrages (16) coulissant sur leurs propres pieds (17) sur le bord (14) du corps supérieur pour soutenir et ouvrir/enrouler la toile couvrante,
une boucle ou une partie de corde (30) ayant deux extrémités sous traction sur un centrage (18) dudit jeu, appelé centrage de treuil, pour le déplacer en arrière et en avant sur le bord, un moteur (50) pour mettre la boucle de corde en mouvement et déplacer le centrage de treuil,
**caractérisé en ce que**
le moteur comprend un actionneur linéaire (52, 54) monté de sorte que le mouvement linéaire qu'il engendre est converti en déplacement de la corde,
l'actionneur linéaire comprenant en outre un piston amovible dans le sens linéaire (54), qui est couplé à un mécanisme pour convertir le mouvement linéaire en mouvement rotatoire,
le mécanisme comprenant
un châssis monté sur le piston (54),
une poulie dentée (20) engrenée avec ce dernier,
une poulie motrice sur laquelle est enroulée la corde et dont la rotation la met en mouvement,
un mécanisme multiplicateur de tours entre la poulie dentée et la poulie motrice, susceptible de multiplier les tours qui sont transmis de la poulie dentée (20) à la poulie motrice.

2. Système d'actionnement selon la revendication 1 comprenant un circuit (62, 64) pour amener du fluide sous pression au piston amovible, de sorte que la pression du fluide pousse le piston et le déplace.

3. Système d'actionnement selon la revendication 2, dans lequel le fluide est de l'air comprimé.

4. Système d'actionnement selon n'importe laquelle des revendications précédentes, dans lequel l'actionneur linéaire est aménagé sur le côté du corps supérieur.

5. Système d'actionnement selon n'importe laquelle des revendications précédentes de 1 à 3, où l'actionneur linéaire est aménagé au-dessus du bord/arête du corps supérieur.

6. Système d'actionnement selon n'importe laquelle des revendications précédentes de 1 à 3, dans lequel l'actionneur linéaire comporte un tube creux contenant un piston ou un coulisseau, lequel est déplacé par la pression du fluide. Les deux extrémités de la corde sont fixées au coulisseau, de sorte qu'un déplacement linéaire du coulisseau dans deux directions opposées provoque le déplacement d'une partie de corde dans l'une ou l'autre direction.

7. Système d'actionnement selon n'importe laquelle des revendications précédentes, dans lequel l'actionneur linéaire est alimenté en électricité.
